# EUROPÄISCHE PATENTSCHRIFT

(11) **EP 2 704 366 B1**
(45) Veröffentlichungstag und Bekanntmachung des Hinweises auf die Patenterteilung: **27.04.2016**
(21) Anmeldenummer: 13181949.2
(22) Anmeldetag: 28.08.2013
(51) Int. Cl.: H04L 12/28, H04L 29/06

(54) **Sichere Authentifizierung eines Sensors oder Aktors eines Hausautomatisierungssystems**
Securely Authenticating a Sensor or Actuator of a Home Automation System
Authentification sécurisée d'un capteur ou d'un actionneur d'un système d'automatisation domestique

(30) Priorität: 30.08.2012 DE 102012108062
(43) Veröffentlichungstag der Anmeldung: 05.03.2014
(73) Patentinhaber: Gigaset Communications GmbH, 40549 Düsseldorf (DE)
(72) Erfinder: Ord, Nicholas, 46395 Bocholt (DE)
(74) Vertreter: Michalski Hüttermann & Partner Patentanwälte mbB

(56) Entgegenhaltungen:
- EP-A1- 1 605 627
- DE-A1-102011 053 923
- US-A1- 2012 202 459
- US-B1- 7 526 539
- HOLMQUIST L E ET AL: "SMART-ITS FRIENDS: A TECHNIQUE FOR USERS TO EASILY ESTABLISH CONNECTIONS BETWEEN SMART ARTEFACTS", INTERNET CITATION, [Online] XP009052293, Gefunden im Internet: URL:HTTP://www.smart-its.org/publication/s mart-its-friends.ubicomp2001.pdf> [gefunden am 2001-09-01]

## Beschreibung

Die Erfindung betrifft ein Verfahren zur sicheren Authentifizierung eines Sensors oder Aktors eines Hausautomatisierungssystems eines Hauses gemäß Oberbegriff des Anspruchs 1 sowie ein Sensor- und Aktor-Authentifizierungssystem gemäß Oberbegriff des Anspruchs 14.

Hausautomatisierungssysteme mit Vorrichtungen zur Überwachung, zur Steuerung und zur Regelung von Abläufen in Privathäusern sind im Stand der Technik bekannt. In diesen Hausautomatisierungssystemen kommen verschiedenste Sensoren und Aktoren zum Einsatz, beispielsweise in Rollladensteuerungen, Tür- und Torsteuerungen, Heizungsthermostaten und Alarmanlagen, die von außerhalb des Hauses fernbedient werden können. Dabei ist eine sichere Authentifizierung von Sensoren und Aktoren von großer Bedeutung. Dabei soll unter einer "Authentifizierung" in diesem Zusammenhang insbesondrere die Erbringung eines Nachweises hinsichtlich spezifischer Eigenschaften verstanden werden. Unter einer "Identifizierung" soll in diesem Zusammenhang insbesondere eine Authentifizierung hinsichtlich einer Identität verstanden werden.

Die sichere Authentifizierung kann u.U. ein hohes Maß an Fachwissen erfordern, was eine weite Verbreitung dieser Technik behindern könnte. Weiterhin unterliegen hausbezogene Daten, die beispielsweise mittels Internet übertragen werden können, den strengen Regularien des Datenschutzgesetzes in Bezug auf eine sichere Datenspeicherung und auf Berechtigungen, damit beispielsweise verschiedene Anwender nicht irrtümlicherweise verwechselt werden können. Außerdem bedeutet die Möglichkeit, dass unberechtigte Computereindringlinge ("hacker") das Hausautomatisierungssystem stören, blockieren, manipulieren oder falsch positive Ergebnisse in einem Alarmmeldesystem erzeugen (d.h. Berechtigungen erhalten, ohne berechtigt zu sein), ein großes Sicherheitsrisiko für einen Einsatz des Hausautomatisierungssystems. Ebenso stellt ein Unterdrücken von Alarmen ein Risiko dar.

Es ist daher wünschenswert, ein sicheres Verfahren zur Authentifizierung zur Verfügung zu haben, das so einfach ist, dass es auch von nicht speziell dafür ausgebildeten Anwendern ausgeführt werden kann.

Verfahren zur Authentifizierung von Objekten sind im Stand der Technik bekannt. In einer Public-Key-Infrastruktur wird die Authentizität beispielsweise durch eine Kette von digitalen Zertifikaten (Zertifizierungspfad) bestätigt, die innerhalb des Zertifizierungspfades von verschiedenen Organisationen ausgestellt bzw. bestätigt werden. Die Echtheit des letzten Zertifikates wird in diesem Verfahren ohne ein weiteres Zertifikat vermutet.

Die US 7,526,539 B1 beschreibt ein Software-Steuermodul mit dem es einem Benutzer möglich ist Hausautomatisierungssysteme und Geräte von einem oder mehreren Remote-Schnittstellen auf einem Datenpaket-Netzwerk zu überwachen und zu steuern.

Die EP 1 605 627 beschreibt eine Technik der Verbindungauthentifizierung, um eine drahtlose Kommunikation zwischen einem drahtlosen Kommunikationsendgerät mit Kontrollfunktionen einer Basisstation und drahtlosen Kommunikationsendgeräten unter der Kontrolle der Basisstation in einem drahtlosen Kommunikationsnetzwerk aufzubauen, wobei das drahtlose Kommunikationsnetzwerksystem einen drahtlosen Kommunikationsstandard, wie zum Beispiel Bluetooth, für die Datenübertragung verwendet.

Es ist daher insbesondere die Aufgabe der Erfindung, ein Verfahren zur Authentifizierung eines Sensors oder Aktors anzuheben, das besonders einfach durchführbar ist und insbesondere dennoch eine ausreichende Sicherheit für eine Anwendung des Sensors oder Aktors in einem Hausautomatisierungssystems eines Hauses erzielt.

Gelöst wird diese Aufgabe mit einem Verfahren zur sicheren Authentifizierung eines Sensors oder Aktors eines Hausautomatisierungssystems eines Hauses durch ein außerhalb des Hauses befindliches Computer-Netzwerk unter Verwendung einer ersten Kommunikationsvorrichtung zur Herstellung einer drahtlosen Netzwerkverbindung, wobei
der Sensor oder Aktor
- mit einer zweiten Vorrichtung zur Herstellung einer zumindest teilweise drahtlosen Netzwerkverbindung ausgestattet oder verbindbar ist und zur Anmeldung an das Computer-Netzwerk
- eine Adresse des Computer-Netzwerks und Identifikationsdaten (z.B. Seriennummer) umfasst, die in Speicherelementen hinterlegt sind, und wobei die erste Kommunikationsvorrichtung
- eine in einem Speicherelement implementierte Anwendungssoftware (App) umfasst, die dazu vorgesehen ist, auf Zugangs- und Identifikationsdaten einer Netzwerkverbindung der ersten Kommunikationsvorrichtung zuzugreifen, **gekennzeichnet durch** folgende Schritte:
   (a) Herstellen einer zumindest teilweise drahtlosen Netzwerkverbindung zwischen dem Sensor oder Aktor und dem Computer-Netzwerk,
   (b) Herstellung einer drahtlosen Netzwerkverbindung zwischen der ersten Kommunikationsvorrichtung und einem Computer-Netzwerk mittels der Anwendungssoftware,
   (c) Erzeugen von zwei im Wesentlich identischen digitalen Datensträngen, wobei digitale Signale der ersten Kommunikationsvorrichtung (14) zur Erzeugung eines ersten digitalen Datenstrangs und digitale Signale des Sensors (22) oder Aktors zu Erzeugung des zweiten digitalen Datenstrangs verwendet werden,
   (d) erste Übertragung einer Information in Form des ersten digitalen Datenstrangs von der ersten Kommunikationsvorrichtung über.die drahtlose Netzwerkverbindung zum Computer-Netzwerk,
   (e) zweite Übertragung der Information in Form des zweiten digitalen Datenstrangs vom Sensor oder Aktor über die zumindest teilweise drahtlose Netzwerkverbindung zum Computer-Netzwerk,
   (f) Durchführen eines Vergleichs zwischen dem ersten digitalen Datenstrang und dem zweiten digitalen Datenstrang im Computer-Netzwerk,
   (g) Authentifizieren des Sensors oder Aktors bei einem positiven Resultat des Vergleichs, wobei zur Erzielung eines positiven Resultats des Vergleichs eine Übereinstimmung des ersten und des zweiten Datenstrangs erforderlich ist.

Durch eine Kombination
- der Übertragung der Information auf zwei unterschiedlichen Netzwerkverbindungen zum Computer-Netzwerk,
- dem in zeitlicher Nähe dort stattfindenden Vergleich der digitalen Datenstränge,
- der Eingabe eines Zugangscodes (Aktivierungscodes),
- der Zuordnung zwischen dem User-Account im Computer-Netzwerk und den von der Anwendungssoftware abgeholten Zugangs- und Identifikationsdaten, und
- der Übertragung eines Identifizierungscodes (Sicherheitscodes) an die Adresse des Computer-Netzwerks können bei einer Konfiguration des Sensors oder Aktors die Identität des Sensors oder Aktors und die Identität der ersten Kommunikationsvorrichtung sichergestellt werden, so dass eine sichere Authentifizierung des Sensors oder Aktors gewährleistet werden kann.

In einer weiteren Ausgestaltung kann der Aktivierungscode nach der Herstellung der drahtlosen Netzwerkverbindung zwischen der ersten Kommunikationsvorrichtung und dem User-Account im Computer-Netzwerk von diesem generiert und an die erste Kommunikationsvorrichtung zur Eingabe übertragen werden, wodurch die Sicherheit zusätzlich erhöht werden kann.

Das Authentifizierungs-Verfahren erlaubt eine Identifikation jeder auf diese Weise authentifizierten Komponente im Falle eines später auftretenden Ereignisses oder einer Beeinträchtigung des Sensors oder Aktors.

Die teilweise drahtlose Netzwerkverbindung der zweiten Vorrichtung kann vorzugsweise eine Verbindung durch einen Router oder ein Gateway umfassen. Eine weitere Verbindung des Routers oder Gateways kann vorzugsweise mittels einer Festnetzverbindung erfolgen.

Als Computer-Netzwerk kann vorteilhaft insbesondere ein Cloud Computing-Netzwerk mit zumindest einem Server vorgesehen sein.

Bei einem bevorzugten Ausführungsbeispiel des Verfahrens ist vorgesehen, dass die erste Kommunikationsvorrichtung aus einer Gruppe ausgewählt ist, die aus einem Mobiltelefon, insbesondere einem Smartphone, einem Personal Digital Assistant (PDA) und einem Tablet-PC ("tablet computer") besteht. Durch den gewohnten Umgang mit der ersten Kommunikationsvorrichtung und deren leichter Verfügbarkeit kann dadurch für einen Anwender des Hausautomatisierungssystems ein besonders einfach durchführbares und eingängiges Verfahren zur Authentifizierung bereitgestellt werden.

Besonders bevorzugt ist die drahtlose Netzwerkverbindung zwischen der ersten Kommunikationsvorrichtung und dem User-Account im Computer-Netzwerk von einer Mobilfunkverbindung gebildet. Durch diese zweite Datenverbindung, die von der zumindest teilweise drahtlosen Netzwerkverbindung zwischen dem Sensor oder Aktor und dem Computer-Netzwerk vollkommen unabhängig ist, kann eine besonders hohe Sicherheit der Authentifizierung erzielt werden, die für einen Anwender besonders komfortabel gestaltet ist.

Vorzugsweise umfasst die zweite Vorrichtung zur Herstellung einer zumindest teilweise drahtlosen Netzwerkverbindung eine Funknetzverbindung mit einem Übertragungsstandard, der aus einer Gruppe ausgewählt ist, die von WiFi bzw. WLAN (Wireless Local Area Network), Bluetooth, ZigBee, Z-Wave, EnOcean, Machine-To-Machine (M2M) und DECT (Digital Enhanced Cordless Telecommunications) gebildet ist. Grundsätzlich kann die Funknetzverbindung auch einen anderen, dem Fachmann als geeignet erscheinenden Übertragungsstandard aufweisen.

Insbesondere kann die drahtlose Netzwerkverbindung zwischen dem Sensor oder Aktor und dem Router oder dem Gateway bestehen.

In einer bevorzugten Ausgestaltung ist die Information von dem Identifizierungscode (Sicherheitscode) gebildet, der in Klarschrift auf dem Sensor oder Aktor angebracht ist. Ferner weist das Verfahren folgenden Schritt auf:
- Eingabe des Identifizierungscodes (Sicherheitscodes) des Sensors oder Aktors unter Verwendung der Anwendungssoftware.

Durch die Eingabe des Identifizierungscodes (Sicherheitscodes) des Sensors oder Aktors unter Verwendung der Anwendungssoftware in die erste Kommunikationsvorrichtung, die vorzugsweise durch den Anwender erfolgen kann, werden im Computer-Netzwerk die auf zwei Kommunikationswegen übertragenen digitalen Datenstränge, die beide den Identifizierungscode (Sicherheitscode) des Sensors oder Aktors beinhalten, miteinander verglichen, wodurch eine einfache und sichere Authentifizierung ermöglicht ist.

In einer weiteren bevorzugten Ausgestaltung weist die erste Kommunikationsvorrichtung eine optische Vorrichtung zur Erfassung und Mittel zur Konvertierung von Strichcodes und QR-Codes auf, und die Information ist von dem Identifizierungscode (Sicherheitscode) gebildet, der als Strichcode oder als QR-Code ausgebildet und auf dem Sensor oder Aktor angebracht ist. Des Weiteren weist das Verfahren folgenden Schritt auf:
- Erfassen des Identifizierungscodes (Sicherheitscode) des Sensors oder Aktors unter Verwendung der Anwendungssoftware.

Unter der "Verwendung der Anwendungssoftware" soll in diesem Zusammenhang insbesondere verstanden werden, dass die Anwendungssoftware auf Ergebnisdaten des Mittels zur Konvertierung des Strichcodes oder QR-Codes zugreift.

Der QR-Code ist bevorzugt gemäß einem der bekannten Standards für QR-Codes oder gemäß einem ihrer Weiterbildungen ausgebildet.

Wenn die Information von dem Identifizierungscode (Sicherheitscode) gebildet und entweder in Klarschrift, als Strichcode oder als QR-Code ausgebildet und auf dem Sensor oder Aktor angebracht ist, dann umfasst der Vergleich vorzugsweise eine Identitätsprüfung. Die Identitätsprüfung kann so ausgestaltet sein, dass zur Erzielung eines positiven Resultats des Vergleichs eine vollständige Übereinstimmung des ersten und des zweiten digitalen Datenstrangs erforderlich ist.

In einer besonders bevorzugten Ausgestaltung sind der Sensor oder Aktor und die erste Kommunikationsvorrichtung jeweils mit einem Mittel zur Umwandlung einer mechanischen Beschleunigung in ein korrespondierendes, digitales Signal ausgestattet. Das Verfahren weist ferner folgenden Schritt auf:
- Die erste Kommunikationsvorrichtung und der Sensor oder Aktor werden simultan einer im Wesentlichen identischen, zufälligen, mechanischen Beschleunigung ausgesetzt, wobei die digitalen Signale der ersten Kommunikationsvorrichtung zur Erzeugung des ersten digitalen Datenstrangs und die digitalen Signale des Sensors oder Aktors zur Erzeugung des zweiten digitalen Datenstrangs verwendet werden.

Bevorzugt können die Mittel zur Umwandlung einer mechanischen Beschleunigung von Beschleunigungssensoren in MEMS-(micro-electro-mechanical systems) Technik gebildet sein.

Dadurch kann die Information in Form eines digitalen Datenstrangs eine Datengröße und eine Komplexität erreichen, die die Möglichkeiten eines Anwenders im Falle einer manuellen Eingabe für praktische Anwendungen bei weitem übersteigt, und die auch die Komplexität eines QR-Codes weit übertrifft, wodurch eine stark erhöhte Sicherheit des Authentifizierungsverfahrens bei gleichzeitig einfacher Handhabung durch den Anwender erreichbar ist.

Wenn der erste digitale Datenstrang aus den Signalen des Mittels der ersten Kommunikationsvorrichtung zur Umwandlung der Beschleunigung und der zweite digitale Datenstrang aus den Signalen des Mittels des Sensors oder Aktors zur Umwandlung der Beschleunigung entstanden ist, dann umfasst der Vergleich vorzugsweise eine Ähnlichkeitsanalyse, deren Resultat mit einem im Computer-Netzwerk hinterlegten Wert verglichen wird.

Da die identische, zufällige, mechanische Beschleunigung von zwei unterschiedlichen Mitteln umgesetzt wird und die Mittel und das Verfahren Toleranzen beinhalten, sind der erste digitale Datenstrang und der zweite digitalen Datenstrang nicht identisch. Die Ähnlichkeitsanalyse kann bevorzugt eine Kreuzkorrelationsfunktion umfassen, mit der ein Kreuzkorrelationskoeffizient bestimmt wird. Der im Computer-Netzwerk hinterlegte Wert kann vorzugsweise ein Mindestwert des Kreuzkorrelationskoeffizienten sein, der vom Resultat der Ähnlichkeitsanalyse übertroffen werden muss. Dem Fachmann sind weitere geeignete Verfahren zur Ähnlichkeitsanalyse geläufig.

Dadurch kann die hohe Komplexität der Information in Form des ersten digitalen Datenstrangs und des zweiten digitalen Datenstrangs zur Erhöhung der Sicherheit des Authentifizierungsverfahrens eingesetzt und gleichzeitig in einfacher Weise ein eindeutiges Vergleichsergebnis erreicht werden.

Bei einem besonders bevorzugten Ausführungsbeispiel ist vorgesehen, dass die erste Kommunikationsvorrichtung mit einer Fortschrittsanzeige ausgestattet ist, wobei die Fortschrittsanzeige zumindest von einer momentan erreichten Qualität der Zufälligkeit des ersten digitalen Datenstrangs und des zweiten digitalen Datenstrangs und von einer Länge der beiden digitalen Datenstränge abhängig ist.

Für eine Beurteilung der Zufälligkeit sind geeignete Verfahren im Stand der Technik bekannt.

Die Fortschrittsanzeige kann als eine Reihe von Leuchtelementen ausgebildet sein, von denen mit fortschreitender Länge des Zufalls-Datenstrangs eine anwachsende Anzahl aktiviert wird. Alternativ dazu kann die Fortschrittsanzeige als Fortschrittsbalken in einer Anzeigeeinheit der ersten Kommunikationsvorrichtung ausgebildet sein.

Durch eine solche Anzeige kann eine Durchführung des Verfahrens für nicht speziell dafür ausgebildete Anwender besonders einfach gestaltet und insbesondere ein Ende einer durch den Anwender durchzuführenden notwendigen Handlung des Verfahrens angezeigt werden.

Insbesondere kann dadurch eine Ausführung der identischen, zufälligen, mechanischen Beschleunigung der ersten Kommunikationsvorrichtung und des Sensors oder Aktors kontrolliert werden. Die Beurteilung der Zufälligkeit kann insbesondere derart ausgelegt sein, dass bei einem zeitweiligen Aussetzen der Beschleunigung keine Erhöhung der Fortschrittsanzeige erfolgt.

Zur weiteren Erhöhung der Sicherheit und zur Verhinderung äußerer Manipulationen ist es in einer weiteren Ausgestaltung vorgesehen, dass durch die Übertragung des Identifizierungscodes (Sicherheitscode) an die Adresse des Computer-Netzwerks durch den Sensor oder Aktor ein Zeitfenster vorbestimmter Dauer gestartet wird, innerhalb dessen eine Authentifizierung des Sensors oder Aktors vollzogen sein muss. Wenn die Authentifizierung innerhalb dieses Zeitfensters nicht erfolgt ist, kann ein Abbruch des Verfahrens oder eine weitere Eingabe eines Codes zur Bestätigung einer Fortführung des Verfahrens vorgesehen sein.

In einer bevorzugten Weiterbildung der Erfindung ist vorgesehen, dass die erste Kommunikationsvorrichtung eine Empfangseinrichtung für Daten eines Standortbestimmungssystems umfasst und folgende weitere Verfahrensschritte ausgeführt werden:
- Erfassen von Daten des Standortbestimmungssystems durch die Kommunikationsvorrichtung, und
- Plausibilitätsprüfung zwischen den erfassten Daten des Standortbestimmungssystems und hinterlegten Daten des User-Accounts durch das Computer-Netzwerk.

Durch die Plausibilitätsprüfung mit hinterlegten Daten des User-Accounts kann eine Authentifizierung mit einer besonders hohen Sicherheit ausgeführt werden.

Bevorzugt ist das Standortbestimmungssystem von einem satellitengestützten Navigationssystem wie GPS (Global Positioning System), Galileo, GLONASS und Compass gebildet.

Alternativ dazu kann eine Standortbestimmung der ersten Kommunikationsvorrichtung auch über den Standort einer eingebuchten Zelle einer bestehenden Mobilfunkverbindung durchgeführt werden.

In einer weiteren bevorzugten Ausgestaltung sind sowohl die erste Kommunikationsvorrichtung als auch der Sensor oder Aktor jeweils mit einer Empfangseinrichtung für Daten eines Standortbestimmungssystems ausgestattet, deren Daten - zusätzlich zur übertragenen Information - zur Erhöhung der Sicherheit im Computer-Netzwerk einer Plausibilitätsprüfung unterzogen werden.

Gegenstand der Erfindung ist ferner eine Anwendungssoftware zur Ausführung der die erste Kommunikationseinrichtung betreffenden Schritte eines der genannten aus- oder weitergebildeten Verfahren, wobei die Schritte in einen Programmiercode umgewandelt sind, der in einem Speicherelement der ersten Kommunikationsvorrichtung implementierbar und durch einen Prozessor der Beschleunigungsmessvorrichtung ausführbar ist.

Ein weiterer Gegenstand der Erfindung ist ein Sensor- und Aktor-Authentifizierungssystem zur sicheren Authentifizierung eines Sensors oder Aktors eines Hausautomatisierungssystems eines Hauses innerhalb eines außerhalb des Hauses befindlichen Computer-Netzwerks.

Das Sensor- und Aktor-Authentifizierungssystem umfasst:
- eine erste Kommunikationsvorrichtung mit einer Vorrichtung zur Herstellung einer drahtlosen Netzwerkverbindung, wobei die Kommunikationsvorrichtung dazu vorgesehen ist, zumindest eine Information in Form eines ersten digitalen Datenstrangs über die drahtlose Netzwerkverbindung zum Computer-Netzwerk zu übertragen,
   - zumindest einen Sensor oder Aktor eines Hausautomatisierungssystems des Hauses mit einer zweiten Vorrichtung zur Herstellung einer zumindest teilweise drahtlosen Netzwerkverbindung, wobei der Sensor oder Aktor dazu vorgesehen ist, zumindest die Information in Form eines zweiten digitalen Datenstrangs über die zumindest teilweise drahtlose Netzwerkverbindung zum Computer-Netzwerk zu übertragen, wobei der Sensor oder Aktor durch ein Verfahren, das wie vorstehend beschrieben ausgebildet und weitergebildet sein kann, authentifizierbar ist.

Damit ist ein System bereitgestellt, das es dem Anwender des Hausautomatisierungssystems erlaubt, in besonders sicherer Weise und ohne Spezialkenntnisse einen Sensor oder Aktor des Hausautomatisierungssystems zu authentifizieren.

Weitere vorteilhafte Ausgestaltungen ergeben sich aus den Unteransprüchen.

Die Erfindung wird nachfolgend anhand eines Ausführungsbeispiels mit Bezug auf die Zeichnungen näher erläutert. Es zeigen:
- Fig. 1: eine schematische Darstellung eines Ausführungsbeispiels eines erfindungsgemäßen Sensor- und AktorAuthentifizierungssystems, und
- Fig. 2: ein Ablaufschema eines Ausführungsbeispiels eines erfindungsgemäßen Verfahrens zur sicheren Authentifizierung des Sensors gemäß der Fig. 1,
- Fig. 3: ein Ausführungsbeispiel einer erfindungsgemäßen, von einem Identifizierungscode gebildeten Information, und
- Fig. 4: ein weiteres Ausführungsbeispiel einer erfindungsgemäßen, von einem Identifizierungscode gebildeten Information.

Beschreibung einer erfindungsgemäßen Konfiguration eines Sensor- und Aktor-Authentifizierungssystems

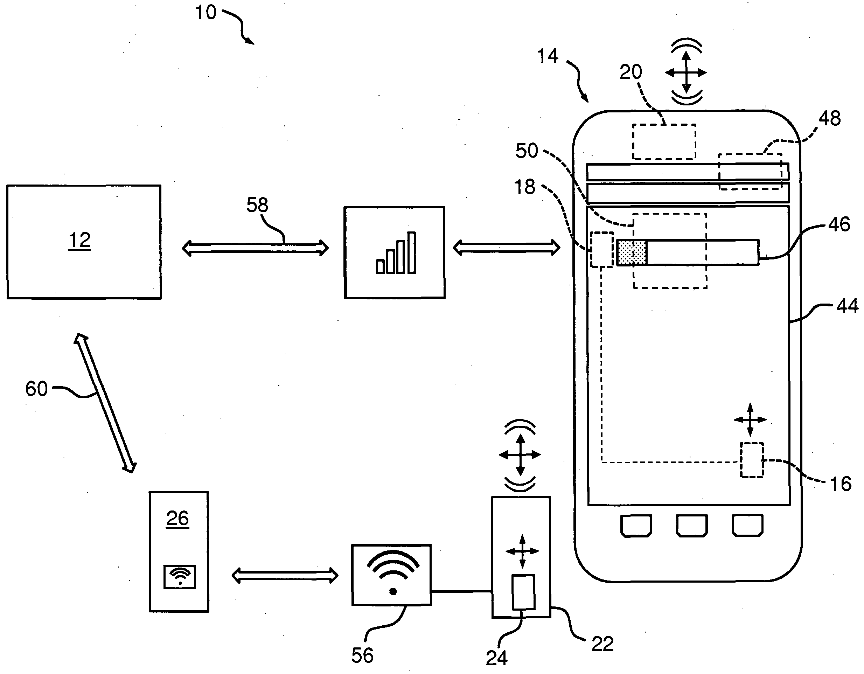

Figur 1 zeigt ein Ausführungsbeispiel eines erfindungsgemäßen Sensor- und Aktor-Authentifizierungssystems 10 zur sicheren Authentifizierung eines Sensors 22 eines Hausautomatisierungssystems eines Hauses durch ein außerhalb des Hauses befindliches Computer-Netzwerk 12 in einer schematischen Darstellung. Das Computer-Netzwerk 12 ist als Cloud Computing-Netzwerk ausgebildet, das zumindest einen Server aufweist.

Das Sensor- und Aktor-Authentifizierungssystem 10 umfasst eine erste Kommunikationsvorrichtung 14 zur Herstellung einer drahtlosen Netzwerkverbindung und ist als Smartphone ausgebildet, das eine Anzeigeeinheit 44 aufweist. Sie könnte aber auch als Kommunikationsvorrichtung ausgebildet sein, die aus einer Gruppe ausgewählt ist, die aus einem Mobiltelefon, einem Personal Digital Assistant (PDA) und einem Tablet-Computer ("tablet computer") besteht.

Ferner sind in Speicherelementen des Smartphones Zugangs- und Identifikationsdaten einer Netzwerkverbindung mit dem Computer-Netzwerk 12 gespeichert.

Das Smartphone umfasst eine implementierte Anwendungssoftware (App), die in einem vorbereitenden Schritt 28 von einem Anwender des Sensor- und Aktor-Authentifizierungssystems 10 installiert wurde. Die Anwendungssoftware ist in einen Programmiercode umgewandelt, der in einem Speicherelement 48 der ersten Kommunikationsvorrichtung 14 implementierbar und durch einen Prozessor 50 der ersten Kommunikationsvorrichtung 14 ausführbar ist. Insbesondere weist die Anwendungssoftware eine Eingabemöglichkeit in Form eines Eingabefeldes zur Eingabe eines Aktivierungscodes auf.

Die Anwendungssoftware ist ferner dazu vorgesehen, auf die Zugangs- und Identifikationsdaten einer Netzwerkverbindung mit dem Computer-Netzwerk 12 zuzugreifen.

Das Smartphone beinhaltet ferner ein Mittel zur Erfassung einer auf die Kommunikationsvorrichtung 14 angewendeten mechanischen Beschleunigung in zwei Raumdimensionen und zur Umwandlung in ein korrespondierendes Signal. Das Mittel ist als kapazitiver Beschleunigungssensor 16 ausgebildet und in bekannter Weise in MEMS (micro-electro-mechanical systems)-Technik ausgeführt.

Die Kommunikationsvorrichtung 14 weist ferner Mittel auf, um das korrespondierende Signal in ein korrespondierendes, digitales Signal umzuwandeln. Weiterhin umfasst die erste Kommunikationsvorrichtung 14 eine Vorrichtung 18 zur Herstellung einer drahtlosen Netzwerkverbindung, die unter anderem dazu vorgesehen ist, das zu der mechanischen Beschleunigung korrespondierende, digitale Signal an das Computer-Netzwerk 12 weiterzuleiten. Die Vorrichtung 18 ist zur Herstellung einer Mobilfunkverbindung 58 vorgesehen.

Ferner weist das Smartphone eine Empfangseinrichtung 20 zum Erfassen von Daten eines vom Global Position System (GPS) gebildeten Standortbestimmungssystems auf.

Weiterhin umfasst das Sensor- und Aktor-Authentifizierungssystem 10 einen Sensor 22 des Hausautomatisierungssystems des Hauses. Der Sensor 22 weist ein Mittel zur Umwandlung einer auf den Sensor 22 angewendeten mechanischen Beschleunigung in ein korrespondierendes digitales, Signal auf, wobei das Mittel zur Umwandlung der Beschleunigung ebenfalls als kapazitiver Beschleunigungssensor 24 in MEMS-Technik ausgebildet ist.

Das weitere Verfahren wird anhand des Sensors 22 des Sensor- und Aktor-Authentifizierungssystem 10 erläutert. Im Falle eines Aktors wird das Verfahren in identischer Weise ausgeführt.

Des Weiteren umfasst der Sensor 22 eine zweite Vorrichtung 56 zur Herstellung einer zumindest teilweise drahtlosen Netzwerkverbindung. Die zweite Vorrichtung 56 umfasst eine WLAN (Wireless Local Area Network)-Schnittstelle als Funknetzverbindung mit einem Übertragungsstandard, der mit einem Standard der IEEE-802.11-Familie (WiFi) kompatibel ist. Die Schnittstelle könnte aber auch aus einer Gruppe ausgewählt sein, die von Bluetooth, ZigBee, Z-Wave, EnOcean, Machine-To-Machine (M2M) und DECT (Digital Enhanced Cordless Telecommunications) gebildet ist.

Der Sensor 22 umfasst, in Speicherelementen hinterlegt, einen Zugangscode zur Anmeldung an das Computer-Netzwerk 12 sowie eine Adresse des Computer-Netzwerks 12 und einen Identifizierungscode, der dem Sensor 22 eindeutig zugeordnet ist.

Des Weiteren weist das Sensor- und Aktor-Authentifizierungssystem 10 einen Router 26 mit einer WLAN-Schnittstelle auf, der zur Herstellung einer Datenverbindung zwischen dem Sensor 22 und dem Computer-Netzwerk 12 vorgesehen ist. Die Verbindung des Routers 26 zum Computer-Netzwerk 12 erfolgt zumindest teilweise mittels einer DSL-Festnetzverbindung 60.

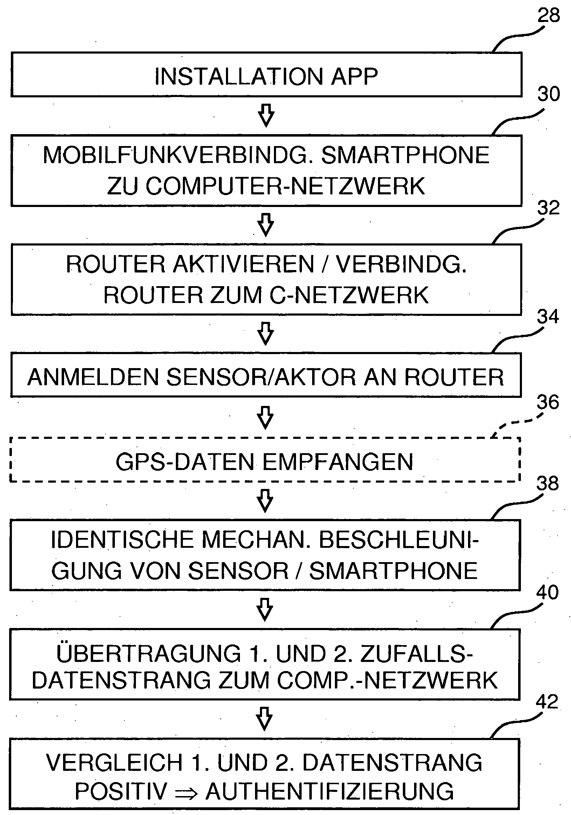

Beschreibung einer Ausgestaltung des Authentifizierungsverfahrens (Fig. 2)

Unter Verwendung der implementierten Anwendungssoftware und der Vorrichtung 18 zur Herstellung einer Mobilfunkverbindung 58 stellt der Anwender in einem ersten Schritt 30 unter Angabe eines Namens und eines Kennworts eine drahtlose Datenverbindung in Form der Mobilfunkverbindung 58 zwischen dem Smartphone und einem User-Account im Computer-Netzwerk 12 her. Wenn das Computer-Netzwerk 12 die Angaben akzeptiert, wird vom Computer-Netzwerk 12 ein Aktivierungscode generiert und an das Smartphone übertragen. Ein Anwender gibt den Aktivierungscode in das Eingabefenster der Anwendungssoftware ein. Daraufhin erfolgt eine Zuordnung zwischen dem User-Account im Computer-Netzwerk 12 und den von der Anwendungssoftware abgeholten Zugangs- und Identifikationsdaten der drahtlosen Netzwerkverbindung der ersten Kommunikationsvorrichtung 14, so dass das Smartphone gegenüber dem Computer-Netzwerk 12 hinreichend identifiziert ist.

In einem weiteren vorbereitenden Schritt 32 wird der Router 26 aktiviert. Im Speicher des Routers 12 müssen keine Daten abgelegt sein, wodurch die Sicherheit erhöht wird.

In einem nächsten Schritt 34 erfolgt eine Anmeldung des Sensors 22 an den Router 26, indem durch einen Tastendruck des Anwenders die als WiFi-fähige Sensorkomponente ausgebildete zweite Vorrichtung 56 aktiviert wird. Daraufhin wird eine zumindest teilweise drahtlose Netzwerkverbindung zwischen dem Sensor 22 und dem Computer-Netzwerk 12 unter Verwendung der im Sensor 22 hinterlegten Adresse des Computer-Netzwerks 12 und des Zugangscodes hergestellt.

In einem darauffolgenden Schritt überträgt der Sensor 22 den Identifizierungscode an die Adresse des Computer-Netzwerks 12, so dass der Sensor 22 gegenüber dem Computer-Netzwerk 12 hinreichend identifiziert ist.

Durch die Übertragung des Identifizierungscodes an die Adresse des Computer-Netzwerks 12 durch den Sensor 22 wird als zusätzliche Sicherheitsmaßnahme ein Zeitfenster mit einer vorbestimmter Dauer von fünf Minuten gestartet, innerhalb dessen eine Authentifizierung des Sensors 22 vollzogen sein muss.

Der Start des Zeitfensters wird durch ein vom Computer-Netzwerk 12 über die Mobilfunkverbindung 58 an das Smartphone gesendetes Datensignal im Smartphone unter Verwendung der Anwendungssoftware durch Einblenden einer Fortschrittsanzeige 46 in der Anzeigeeinheit 44 angezeigt.

Bei einer Entscheidung zu einer Authentifizierung des Sensors 22 mit einer besonders hohen Sicherheit stellt der Anwender in einem zusätzlichen Schritt 36 sicher, dass durch die GPS-Empfangseinrichtung 20 der ersten Kommunikationsvorrichtung 14 Daten des Global Position Systems (GPS) erfasst werden. Daraufhin findet durch das Computer-Netzwerk 12 eine Plausibilitätsprüfung zwischen den erfassten Daten des Standortbestimmungssystems und hinterlegten Daten des User-Accounts statt. Bei einem positiven Ausgang der Plausibilitätsprüfung wird das Verfahren fortgesetzt, bei einem negativen Ausgang der Plausibilitätsprüfung wird das Verfahren mit einer entsprechenden Fehlermeldung an die Anzeigeeinheit 44 des Smartphones abgebrochen.

In einem weiteren Schritt 38 nimmt der Anwender den Sensor 22 und das Smartphone in eine Hand und führt mehrfach zufällige Auf- und Abbewegungen der Hand aus, durch die der Sensor 22 und die erste Kommunikationsvorrichtung 14 simultan einer im Wesentlichen identischen mechanischen Beschleunigung ausgesetzt werden.

Durch die mechanische Beschleunigung werden zwei im Wesentlichen identische, digitale Datenstränge erzeugt, wobei die digitalen Signale der ersten Kommunikationsvorrichtung 14 zur Erzeugung des ersten digitalen Datenstrangs und die digitalen Signale des Sensors 22 zur Erzeugung des zweiten digitalen Datenstrangs verwendet werden.

Die Anwendungssoftware ist dazu vorgesehen, während der Erzeugung der beiden Datenstränge in der Fortschrittsanzeige 46 des Smartphones einen Fortschritt in einer Balkenform darzustellen, wobei die Fortschrittsanzeige 46 von einer momentan erreichten Qualität der Zufälligkeit des ersten digitalen Datenstrangs und des zweiten digitalen Datenstrangs und von einer Länge der beiden digitalen Datenstränge abhängig ist.

Bei einem Erreichen einer vorbestimmten Datenstrangqualität- und -quantität, durch Erreichen einer vollständigen Balkenlänge und durch einen Farbwechsel angezeigt, wird dem Anwender ein Ende des durchzuführenden notwendigen Schritts 38 des Verfahrens angezeigt.

In einem folgenden Schritt 40 wird eine erste Übertragung einer Information in Form des ersten digitalen Datenstrangs von der ersten Kommunikationsvorrichtung 14 über die drahtlose Netzwerkverbindung zum Computer-Netzwerk 12 durchgeführt, und es wird eine zweite Übertragung der im Wesentlichen identischen Information in Form des zweiten digitalen Datenstrangs vom Sensor 22 über die zumindest teilweise drahtlose Netzwerkverbindung zum Computer-Netzwerk 12 vorgenommen.

Der erste Netzwerkverbindungspfad und der zweite Netzwerkverbindungspfad unterscheiden sich somit vollständig voneinander.

Innerhalb des Computer-Netzwerks 12 wird in einem anschließenden Schritt 42 ein Vergleich zwischen dem ersten digitalen Datenstrang und dem zweiten digitalen Datenstrang durchgeführt. Der Vergleich umfasst eine Ähnlichkeitsanalyse, die die Anwendung einer Kreuzkorrelationsfunktion auf den ersten digitalen Datenstrang und den zweiten digitalen Datenstrang beinhaltet und als Resultat einen Wert für den Kreuzkorrelationskoeffizienten bereitstellt. Der Wert des Kreuzkorrelationskoeffizienten wird mit einem im Computer-Netzwerk 12 hinterlegten Mindestwert für den Kreuzkorrelationskoeffizienten verglichen, der für ein Erreichen eines positiven Resultats vom Kreuzkorrelationskoeffizienten der Ähnlichkeitsanalyse übertroffen werden muss. Bei einem positiven Resultat des Vergleichs erfolgt eine Authentifizierung des Sensors 22.

Nach Abschluss der Übertragung wird auf dem Smartphone die Meldung "Sensor online" angezeigt. Vom Sensor 22 aufgenommene Daten werden anschließend in Echtzeit mittels der WLAN-Verbindung zwischen Sensor 22 und Router 26, mittels der DSL-Festnetzverbindung 60 des Routers 26 zum Computer-Netzwerk 12 und mittels der Mobilfunkverbindung 58 an das Smartphone übertragen.

Die im Folgenden beschriebenen alternativen Ausführungsbeispiele betreffen im Wesentlichen die Ausgestaltung der in den Schritten (c) und (d) zu übertragenden Information. Die Ausgestaltung der übrigen Komponenten entspricht denen des ersten Ausführungsbeispiels mit der Ausnahme, dass der Schritt 38 entfällt.

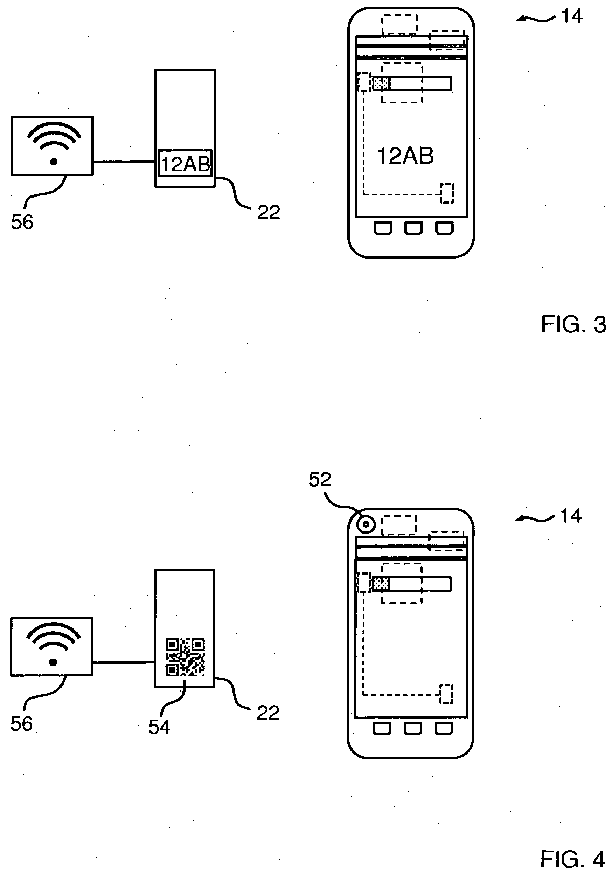

In einem weiteren Ausführungsbeispiel (Fig. 3) ist die Information von einem Identifizierungscode gebildet, der durch eine alphanumerische Zahlenreihe ausgebildet und in Klarschrift auf einem Etikett aufgedruckt ist, das auf dem Sensor 22 aufgeklebt ist. Dieser Identifizierungscode wird von einem Anwender unter Verwendung der Anwendungssoftware in die als Smartphone ausgebildete erste Kommunikationsvorrichtung 14 eingegeben, so dass der Identifizierungscode sowohl in einem Speicherelement des Sensors 22 als auch im Smartphone verfügbar ist. Der im Computer-Netzwerk 12 durchzuführende Vergleich beinhaltet eine Identitätsprüfung, wobei zur Erzielung eines positiven Resultats des Vergleichs eine vollständige Übereinstimmung des ersten und des zweiten digitalen Datenstrangs erforderlich ist. Bei einer unvollständigen Übereinstimmung wird das Authentifizierungsverfahren abgebrochen.

In einem alternativen Ausführungsbeispiel (Fig. 4) weist die als Smartphone ausgebildete erste Kommunikationsvorrichtung 14 zusätzlich eine von einer Kamera 52 gebildete optische Vorrichtung zur Erfassung und Software-Mittel zur Konvertierung von Strichcodes und QR-Codes 54 in einen digitalen Datenstrang auf.

Die Information ist von einem Identifizierungscode gebildet, der als Strichcode oder als QR-Code 54 ausgebildet und auf einem Etikett aufgedruckt ist, das auf dem Sensor 22 angebracht ist. In einem weiteren Verfahrensschritt wird der Identifizierungscode des Sensors 22 mittels der Kamera 52 des Smartphones erfasst, durch die Software-Mittel in einen digitalen Datenstrang konvertiert, so dass der Identifizierungscode sowohl in einem Speicherelement des Sensors als auch im Smartphone verfügbar ist. Unter Verwendung der Anwendungssoftware wird der Identifizierungscode als erster digitaler Datenstrang übertragen. Der im Computer-Netzwerk 12 durchzuführende Vergleich beinhaltet eine Identitätsprüfung, wobei zur Erzielung eines positiven Resultats des Vergleichs eine vollständige Übereinstimmung des ersten und des zweiten digitalen Datenstrangs erforderlich ist. Bei einer unvollständigen Übereinstimmung wird das Authentifizierungs-verfahren abgebrochen.

## Patentansprüche

1. Verfahren zur sicheren Authentifizierung eines Sensors (22) oder Aktors eines Hausautomatisierungssystems eines Hauses durch ein außerhalb des Hauses befindliches Computer-Netzwerk (12)unter Verwendung einer ersten Kommunikationsvorrichtung (14) zur Herstellung einer drahtlosen Netzwerkverbindung, wobei
der Sensor (22) oder Aktor
- mit einer zweiten Vorrichtung (56) zur Herstellung einer zumindest teilweise drahtlosen Netzwerkverbindung ausgestattet oder verbindbar ist und zur Anmeldung an das Computer-Netzwerk (12)
- eine Adresse des Computer-Netzwerks (12) und Identifikationsdaten umfasst, die in Speicherelementen hinterlegt sind, und wobei
die erste Kommunikationsvorrichtung (14)
- eine in einem Speicherelement (48) implementierte Anwendungssoftware (App) umfasst, die dazu vorgesehen ist, auf Zugangs- und Identifikationsdaten einer Netzwerkverbindung der ersten Kommunikationsvorrichtung (14) zuzugreifen,
mit folgenden Schritten:
(a) Herstellen einer zumindest teilweise drahtlosen Netzwerkverbindung zwischen dem Sensor (22) oder Aktor und dem Computer-Netzwerk,
(b) Herstellung einer drahtlosen Netzwerkverbindung zwischen der ersten Kommunikationsvorrichtung (14) und einem Computer-Netzwerk (12) mittels der Anwendungssoftware,
**dadurch gekennzeichnet, dass das** Verfahren weiter folgende Schritte umfasst:
(c) Erzeugen von zwei im Wesentlich identischen digitalen Datensträngen, wobei digitale Signale der ersten Kommunikationsvorrichtung (14) zur Erzeugung eines ersten digitalen Datenstrangs und digitale Signale des Sensors (22) oder Aktors zu Erzeugung des zweiten digitalen Datenstrangs verwendet werden,
(d) erste Übertragung einer Information in Form des ersten digitalen Datenstrangs von der ersten Kommunikationsvorrichtung (14) über die drahtlose Netzwerkverbindung zum Computer-Netzwerk (12),
(e) zweite Übertragung der Information in Form des zweiten digitalen Datenstrangs vom Sensor (22) oder Aktor über die zumindest teilweise drahtlose Netzwerkverbindung zum Computer-Netzwerk (12),
(f) Durchführen eines Vergleichs zwischen dem ersten digitalen Datenstrang und dem zweiten digitalen Datenstrang im Computer-Netzwerk (12),
(g) Authentifizieren des Sensors (22) oder Aktors bei einem positiven Resultat des Vergleichs, wobei zur Erzielung eines positiven Resultats des Vergleichs eine Übereinstimmung des ersten und des zweiten Datenstrangs erforderlich ist.

2. Verfahren nach Anspruch 1, **dadurch gekennzeichnet, dass** die erste Kommunikationsvorrichtung (14) aus einer Gruppe ausgewählt ist, die aus einem Mobiltelefon, insbesondere Smartphone, einem Personal Digital Assistant (PDA) und einem Tablet-Computer ("tablet computer") besteht.

3. Verfahren nach Anspruch 1 oder 2, **dadurch gekennzeichnet, dass** die drahtlose Netzwerkverbindung zwischen der ersten Kommunikationsvorrichtung (14) und dem User-Account im Computer-Netzwerk (12) von einer Mobilfunkverbindung (58) gebildet ist.

4. Verfahren nach einem der vorhergehenden Ansprüche, **dadurch gekennzeichnet, dass** die zweite Vorrichtung (56) zur Herstellung einer zumindest teilweise drahtlosen Netzwerkverbindung eine Funknetzverbindung mit einem Übertragungsstandard umfasst, der aus einer Gruppe ausgewählt ist, die von WiFi bzw. WLAN (Wireless Local Area Network), Bluetooth, ZigBee, Z-Wave, EnOcean, Machine-To-Machine (M2M) und DECT (Digital Enhanced Cordless Telecommunications) gebildet ist.

5. Verfahren nach Anspruch 1, **dadurch gekennzeichnet, dass** die Information von einem Identifizierungscode gebildet ist, der in Klarschrift auf dem Sensor (22) oder Aktor angebracht ist, und folgenden Schritt:
- Eingabe des Identifizierungscodes des Sensors (22) oder Aktors unter Verwendung der Anwendungssoftware.

6. Verfahren nach Anspruch 1, **dadurch gekennzeichnet, dass** die erste Kommunikationsvorrichtung (14) eine optische Vorrichtung zur Erfassung und Mittel zur Konvertierung von Strichcodes und QR-Codes (54) aufweist und die Information von dem Identifizierungscode gebildet ist, der als Strichcode oder als QR-Code (54) ausgebildet und auf dem Sensor (22) oder Aktor angebracht ist, und folgenden Schritt:
- Erfassen des Identifizierungscodes des Sensors (22) oder Aktors unter Verwendung der Anwendungssoftware.

7. Verfahren nach Anspruch 5 und 6, **dadurch gekennzeichnet, dass** der Vergleich eine Identitätsprüfung umfasst.

8. Verfahren nach einem der vorhergehenden Ansprüche, **dadurch gekennzeichnet, dass**
- der Sensor (22) oder Aktor und die erste Kommunikationsvorrichtung (14) jeweils mit einem Mittel zur Umwandlung einer mechanischen Beschleunigung in ein korrespondierendes, digitales Signal ausgestattet sind, und
- die erste Kommunikationsvorrichtung (14) und der Sensor (22) oder Aktor simultan einer im Wesentlichen identischen, zufälligen, mechanischen Beschleunigung ausgesetzt werden, wobei die digitalen Signale der ersten Kommunikationsvorrichtung (14) zur Erzeugung des ersten digitalen Datenstrangs und die digitalen Signale des Sensors (22) oder Aktors zur Erzeugung des zweiten digitalen Datenstrangs verwendet werden.

9. Verfahren nach Anspruch 8, **dadurch gekennzeichnet, dass** der Vergleich eine Ähnlichkeitsanalyse umfasst, deren Resultat mit einem im Computer-Netzwerk (12) hinterlegten Wert verglichen wird.

10. Verfahren nach Anspruch 8 und 9, **dadurch gekennzeichnet, dass** die erste Kommunikationsvorrichtung (14) mit einer Fortschrittsanzeige (46) ausgestattet ist, wobei die Fortschrittsanzeige (46) zumindest von einer momentan erreichten Qualität der Zufälligkeit des ersten digitalen Datenstrangs und des zweiten digitalen Datenstrangs und von einer Länge der beiden digitalen Datenstränge abhängig ist.

11. Verfahren nach einem der vorhergehenden Ansprüche, **dadurch gekennzeichnet, dass** durch die Übertragung des Identifizierungscodes an die Adresse des Computer-Netzwerks (12) durch den Sensor (22) oder Aktor ein Zeitfenster vorbestimmter Dauer gestartet wird, innerhalb dessen eine Authentifizierung des Sensors (22) oder Aktors vollzogen sein muss.

12. Verfahren nach einem der vorhergehenden Ansprüche, **dadurch gekennzeichnet, dass** die erste Kommunikationsvorrichtung (14) eine Empfangseinrichtung (20) für Daten eines Standortbestimmungssystems umfasst und durch folgende weitere Schritte:
- Erfassen von Daten des Standortbestimmungssystems durch die erste Kommunikationsvorrichtung (14), und
- Plausibilitätsprüfung zwischen den erfassten Daten des Standortbestimmungssystems und hinterlegten Daten des User-Accounts durch das Computer-Netzwerk (12).

13. Computer programm zur Ausführung der die erste Kommunikationseinrichtung (14) betreffenden Schritte eines Verfahrens nach einem der Ansprüche 1-12, **dadurch gekennzeichnet, dass** die Schritte in einen Programmiercode umgewandelt sind, der in einem Speicherelement (48) der ersten Kommunikationsvorrichtung (14) implementierbar und durch einen Prozessor (50) der ersten Kommunikationsvorrichtung (14) ausführbar ist.

14. Sensor- und Aktor-Authentifizierungssystem (10) zur sicheren Authentifizierung eines Sensors (22) oder Aktors eines Hausautomatisierungssystems eines Hauses innerhalb eines außerhalb des Hauses befindlichen Computer-Netzwerks (12), **dadurch gekennzeichnet, dass** das Sensor- und Aktor-Authentifizierungssystem (10) umfasst:
- eine erste Kommunikationsvorrichtung (14) mit einer Vorrichtung (18) zur Herstellung einer drahtlosen Netzwerkverbindung, wobei die Kommunikationsvorrichtung (14) dazu vorgesehen ist, zumindest eine Information in Form eines ersten digitalen Datenstrangs über die drahtlose Netzwerkverbindung zum Computer-Netzwerk (12) zu übertragen,
- zumindest einen Sensor (22) oder Aktor eines Hausautomatisierungssystems des Hauses mit einer zweiten Vorrichtung (56) zur Herstellung einer zumindest teilweise drahtlosen Netzwerkverbindung, wobei der Sensor (22) oder Aktor dazu vorgesehen ist, zumindest die Information in Form eines zweiten digitalen Datenstrangs über die zumindest teilweise drahtlose Netzwerkverbindung zum Computer-Netzwerk (12) zu übertragen,
wobei der Sensor (22) oder Aktor durch ein Verfahren nach einem der Ansprüche 1 bis 12 authentifizierbar ist.

## Claims

1. Method for securely authenticating a sensor (22) or an actuator of a home automation system in a home by means of a computer network (12) outside the home using a first communication apparatus (14) for establishing a wireless network connection,
the sensor (22) or actuator
- being equipped with or being able to be connected to a second apparatus (56) for establishing an at least partially wireless network connection and, for logging onto the computer network (12),
- comprising an address of the computer network (12) and identification data which are stored in storage elements, and
the first communication apparatus (14)
- comprising application software (App) which is implemented in a storage element (48) and is intended to access access and identification data relating to a network connection of the first communication apparatus (14),
having the following steps:
(a) establishing an at least partially wireless network connection between the sensor (22) or actuator and the computer network,
(b) establishing a wireless network connection between the first communication apparatus (14) and a computer network (12) by means of the application software,
**characterized in that** the method also comprises the following steps:
(c) producing two substantially identical digital data strings, digital signals from the first communication apparatus (14) being used to produce a first digital data string, and digital signals from the sensor (22) or actuator being used to produce the second digital data string,
(d) first transmission of an item of information in the form of the first digital data string from the first communication apparatus (14) to the computer network (12) via the wireless network connection,
(e) second transmission of the information in the form of the second digital data string from the sensor (22) or actuator to the computer network (12) via the at least partially wireless network connection,
(f) comparing the first digital data string and the second digital data string in the computer network (12),
(g) authenticating the sensor (22) or actuator in the event of a positive result of the comparison, a match between the first and second data strings being required in order to achieve a positive result of the comparison.

2. Method according to Claim 1, **characterized in that** the first communication apparatus (14) is selected from a group consisting of a mobile telephone, in particular a smartphone, a personal digital assistant (PDA) and a tablet computer.

3. Method according to Claim 1 or 2, **characterized in that** the wireless network connection between the first communication apparatus (14) and the user account in the computer network (12) is formed by a mobile radio connection (58).

4. Method according to one of the preceding claims, **characterized in that** the second apparatus (56) for establishing an at least partially wireless network connection comprises a radio network connection with a transmission standard selected from a group formed by WiFi or WLAN (Wireless Local Area Network), Bluetooth, ZigBee, Z-Wave, EnOcean, machine-to-machine (M2M) and DECT (Digital Enhanced Cordless Telecommunications).

5. Method according to Claim 1, **characterized in that** the information is formed by an identification code which is applied to the sensor (22) or actuator in plain text, and the following step:
- input of the identification code of the sensor (22) or actuator using the application software.

6. Method according to Claim 1, **characterized in that** the first communication apparatus (14) has an optical apparatus for detecting barcodes and QR codes (54) and means for converting barcodes and QR codes (54), and the information is formed by the identification code which is in the form of a barcode or a QR code (54) and is applied to the sensor (22) or actuator, and the following step:
- detecting the identification code of the sensor (22) or actuator using the application software.

7. Method according to Claims 5 and 6, **characterized in that** the comparison comprises an identity check.

8. Method according to one of the preceding claims, **characterized in that**
- the sensor (22) or actuator and the first communication apparatus (14) are each equipped with a means for converting a mechanical acceleration into a corresponding digital signal, and
- the first communication apparatus (14) and the sensor (22) or actuator are simultaneously exposed to a substantially identical, random, mechanical acceleration, the digital signals from the first communication apparatus (14) being used to produce the first digital data string, and the digital signals from the sensor (22) or actuator being used to produce the second digital data string.

9. Method according to Claim 8, **characterized in that** the comparison comprises a similarity analysis, the result of which is compared with a value stored in the computer network (12).

10. Method according to Claims 8 and 9, **characterized in that** the first communication apparatus (14) is equipped with a progress indicator (46), the progress indicator (46) being dependent at least on an instantaneously achieved quality of the randomness of the first digital data string and of the second digital data string and on a length of the two digital data strings.

11. Method according to one of the preceding claims, **characterized in that**, as a result of the identification code being transmitted to the address of the computer network (12), the sensor (22) or actuator starts a time window of a predetermined duration within which the sensor (22) or actuator must be authenticated.

12. Method according to one of the preceding claims, **characterized in that** the first communication apparatus (14) comprises a receiving device (20) for data from a location determination system and by the following further steps:
- acquisition of data from the location determination system by means of the first communication apparatus (14), and
- plausibility check between the data acquired from the location determination system and stored data from the user account by means of the computer network (12).

13. Computer program for carrying out the steps of a method according to one of Claims 1-12 relating to the first communication device (14), **characterized in that** the steps are converted into a programming code which can be implemented in a storage element (48) of the first communication apparatus (14) and can be executed by a processor (50) of the first communication apparatus (14).

14. Sensor and actuator authentication system (10) for securely authenticating a sensor (22) or actuator of a home automation system in a home inside a computer network (12) outside the home, **characterized in that** the sensor and actuator authentication system (10) comprises:
- a first communication apparatus (14) having an apparatus (18) for establishing a wireless network connection, the communication apparatus (14) being provided for the purpose of transmitting at least one item of information in the form of a first digital data string to the computer network (12) via the wireless network connection,
- at least one sensor (22) or actuator of a home automation system in the home having a second apparatus (56) for establishing an at least partially wireless network connection, the sensor (22) or actuator being provided for the purpose of transmitting at least the information in the form of a second digital data string to the computer network (12) via the at least partially wireless network connection,
the sensor (22) or actuator being able to be authenticated by means of a method according to one of Claims 1 to 12.

## Revendications

1. Procédé d'authentification sécurisée d'un capteur (22) ou d'un actionneur d'un système de domotique d'une maison par l'intermédiaire d'un réseau informatique (12) se trouvant à l'extérieur de la maison en utilisant un premier dispositif de communication (14) destiné à établir une liaison de réseau sans fil, dans lequel
le capteur (22) ou l'actionneur
- est équipé ou peut être connecté par l'intermédiaire d'un second dispositif (56) destiné à établir une liaison de réseau au moins partiellement sans fil et à envoyer une notification au réseau informatique (12),
- comprend une adresse du réseau informatique (12) et des données d'identification qui sont stockées dans un élément à mémoire, et dans lequel
le premier dispositif de communication (14)
- comprend un logiciel d'application (App), implanté dans un élément à mémoire (48), qui est prévu pour accéder à des données d'accès et d'identification d'une liaison de réseau du premier dispositif de communication (14),
comprenant les étapes consistant à :
(a) établir une liaison de réseau au moins partiellement sans fil entre le capteur (22) ou l'actionneur et le réseau informatique,
(b) établir une liaison de réseau sans fil entre le premier dispositif de communication (14) et un réseau informatique (12) au moyen du logiciel d'application, **caractérisé en ce que** le procédé comprend en outre les étapes consistant à :
(c) générer deux flux de données numériques sensiblement identiques, dans lequel des signaux numériques du premier dispositif de communication (14) sont utilisés pour générer un premier flux de données numérique et des signaux numériques du capteur (22) ou de l'actionneur sont utilisés pour générer le second flux de données numérique,
(d) transmettre en premier lieu une information sous la forme du premier flux de données numérique depuis le premier dispositif de communication (14), par l'intermédiaire de la liaison de réseau sans fil, vers le réseau informatique (12),
(e) transmettre en second lieu l'information sous la forme du second flux de données numérique depuis le capteur (22) ou l'actionneur, par l'intermédiaire de la liaison de réseau au moins partiellement sans fil, vers le réseau informatique (12),
(f) effectuer une comparaison entre le premier flux de données numérique et le second flux de données numérique dans le réseau informatique (12),
(g) authentifier le capteur (22) ou l'actionneur lorsque le résultat de la comparaison est positif, une concordance entre les premier et second flux de données étant nécessaire pour obtenir un résultat positif de la comparaison.

2. Procédé selon la revendication 1, **caractérisé en ce que** le premier dispositif de communication (14) est sélectionné dans le groupe constitué d'un téléphone mobile, notamment d'un téléphone intelligent, d'un assistant numérique personnel (PDA) et d'un ordinateur-tablette ("tablette computer").

3. Procédé selon la revendication 1 ou 2, **caractérisé en ce que** la liaison de réseau sans fil est établie entre le premier dispositif de communication (14) et le compte d'utilisateur, sur le réseau informatique (12), d'une liaison radio mobile (58).

4. Procédé selon l'une quelconque des revendications précédentes, **caractérisé en ce que** le second dispositif (56) destiné à établir une liaison de réseau au moins partiellement sans fil comprend une liaison de réseau radio respectant une norme de transmission qui est sélectionnée dans le groupe constitué des normes Wifi ou WLAN (Wireless Local Area Network), Bluetooth, ZigBee, Z-Wave, EnOcean, Machine-à-Machine (M2M) et DECT (Digital Enhanced Cordless Telecommunications).

5. Procédé selon la revendication 1, **caractérisé en ce que** l'information est constituée d'un code d'identification qui est délivré au capteur (22) ou à l'actionneur sous la forme d'un message en clair, et **en ce qu'**il comprend l'étape consistant à :
- fournir en entrée le code d'identification du capteur (22) ou de l'actionneur au moyen du logiciel d'application.

6. Procédé selon la revendication 1, **caractérisé en ce que** le premier dispositif de communication (14) comporte un dispositif optique destiné à détecter des codes à barres ou des codes QR (54), et un moyen destiné à les convertir et l'information est constituée du code d'identification qui est réalisé sous la forme d'un code à barres ou d'un code QR (54) et est délivrée au capteur (22) ou à l'actionneur, et comprend l'étape consistant à :
- détecter le code d'identification du capteur (22) ou de l'actionneur au moyen du logiciel d'application.

7. Procédé selon les revendications 5 et 6, **caractérisé en ce que** la comparaison comprend une vérification d'identité.

8. Procédé selon l'une quelconque des revendications précédentes, **caractérisé en ce que**
- le capteur (22) ou l'actionneur et le premier dispositif de communication (14) sont respectivement munis d'un moyen destiné à convertir une accélération mécanique en un signal numérique correspondant, et
- le premier dispositif de communication (14) et le capteur (22) ou l'actionneur sont simultanément soumis à des accélérations mécaniques aléatoires sensiblement identiques, dans lequel les signaux numériques du premier dispositif de communication (14) sont utilisés pour générer le premier flux de données numérique et les signaux numériques du capteur (22) ou de l'actionneur sont utilisés pour générer le second flux de données numérique.

9. Procédé selon la revendication 8, **caractérisé en ce que** la comparaison comprend une analyse de ressemblance dont le résultat est comparé à une valeur stockée dans le réseau informatique (12).

10. Procédé selon les revendications 8 et 9, **caractérisé en ce que** le premier dispositif de communication (14) est muni d'un indicateur de progression (46), dans lequel l'indicateur d'avancement (46) dépend au moins d'une qualité momentanément obtenue du caractère aléatoire du premier flux de données numérique et du second flux de données numérique et d'une longueur des deux flux de données numériques.

11. Procédé selon l'une quelconque des revendications précédentes, **caractérisé en ce qu'**une fenêtre temporelle de durée prédéterminée est déclenchée par la transmission du code d'identification à l'adresse du réseau informatique (12) par l'intermédiaire du capteur (22) ou de l'actionneur, à l'intérieur de laquelle une authentification du capteur (22) ou de l'actionneur doit être effectuée.

12. Procédé selon l'une quelconque des revendications précédentes, **caractérisé en ce que** le premier dispositif de communication (14) comprend un dispositif de réception (20) de données d'un système de détermination de position et **en ce qu'**il comprend les étapes supplémentaires consistant à :
- détecter des données du système de détermination de position par l'intermédiaire du premier dispositif de communication (14), et
- vérifier la plausibilité entre les données détectées du système de détermination de position et des données stockées du compte d'utilisateur par l'intermédiaire du réseau informatique (12).

13. Programme informatique destiné à mettre en oeuvre les étapes d'un procédé selon l'une quelconque des revendications 1-12, concernant le premier dispositif de communication (14), **caractérisé en ce que** les étapes sont converties en un code de programmation qui peut être implanté dans un élément à mémoire (48) du premier dispositif de communication (14) et peut être exécuté par un processeur (50) du premier dispositif de communication (14).

14. Système d'authentification de capteur ou d'actionneur (10) destiné à sécuriser l'authentification d'un capteur (22) ou d'un actionneur d'un système de domotique d'une maison au sein d'un réseau informatique (12) se trouvant à l'extérieur de la maison, **caractérisé en ce que** le système d'authentification de capteur et d'actionneur (10) comprend :
- un premier dispositif de communication (14) comportant un dispositif (18) destiné à établir une liaison de réseau sans fil, dans lequel le dispositif de communication (14) est conçu pour transmettre au réseau informatique (12) au moins une information sous la forme d'un premier flux de données numérique par l'intermédiaire de la liaison de réseau sans fil,
- au moins un capteur (22) ou un actionneur d'un système de domotique de la maison comportant un second dispositif (56) destiné à établir une liaison de réseau au moins partiellement sans fil, dans lequel le capteur (22) ou l'actionneur est prévu pour transmettre au réseau informatique (12) au moins l'information sous la forme d'un second flux de données numérique par l'intermédiaire de la liaison de réseau au moins partiellement sans fil,
dans lequel le capteur (22) ou l'actionneur peut être authentifié par un procédé selon l'une quelconque des revendications 1 à 12.
